Europäisches Patentamt

European Patent Office

Office européen des brevets

(19)

(11) Veröffentlichungsnummer: **0 249 036**
**A2**

(12) # EUROPÄISCHE PATENTANMELDUNG

(21) Anmeldenummer: **87106760.9**

(22) Anmeldetag: **09.05.87**

(51) Int. Cl.³: **G 01 S 15/18**
**G 01 S 7/52, G 01 S 15/89**

(30) Priorität: **07.06.86 DE 3619253**
**19.02.87 DE 3705286**

(43) Veröffentlichungstag der Anmeldung:
**16.12.87 Patentblatt 87/51**

(84) Benannte Vertragsstaaten:
**DE FR GB IT NL SE**

(71) Anmelder: **Fried. Krupp Gesellschaft mit beschränkter Haftung**
**Altendorfer Strasse 103**
**D-4300 Essen 1(DE)**

(72) Erfinder: **Block, Peter**
**Grasdorf 80**
**D-2802 Ottersberg(DE)**

(54) Verfahren zur Echolaufzeitbestimmung.

(57) Bei einem Verfahren zur Bestimmung der Laufzeit von durch Beschallung eines Gewässergrundes mit Schallimpulsen ausgelösten Echos wird zur Verbesserung der Echodetektion in einem über mindestens eine Empfangsrichtkeule aufgefaßten Empfangssignal um eine Echoerwartungszeit (T) ein zeitliches Echoerwartungsfenster aufgespannt, dessen zeitliche Länge größer bemessen wird als eine aufgrund einer angenommenen maximalen Hanglage $\odot$ des Meeresbodens und/oder einem von der Vertikalen abweichenden Empfangswinkel ($\varphi$) der Empfangsrichtkeule zu erwartenden maximalen Echolänge. Von dem durch das Echoerwartungsfenster begrenzten Empfangssignal wird das Schwerpunktintegral gebildet und die Zeitkomponente ($T_S$) des Schwerpunktes als Echolaufzeit festgelegt. Die Echoerwartungszeit (T) wird aus der Echoausbreitung in einer bekannten Lottiefe abgeleitet. Hierzu wird ein Flankendiskriminator (21) vorgesehen und die durch Flankendiskriminierung ermittelte Echolaufzeit als Echoerwartungszeit (T) verwendet (Fig. 5).

Fig. 5

# BESCHREIBUNG

## Verfahren zur Echolaufzeitbestimmung

Die Erfindung betrifft ein Verfahren zur Bestimmung der Laufzeit von durch Beschallung eines Gewässergrundes mit Schallimpulsen ausgelösten Echos der im Oberbegriff des Anspruchs 1 angegebenen Art.

Ein solches Verfahren, das entweder bei Tiefenlotung mit einem Echo- oder Vertikallot, das eine in Vertikalrichtung weisende Empfangsrichtkeule oder einen Empfangsbeam besitzt, oder bei der akustischen Vermessung des Oberflächenprofils des Gewässergrundes mit einem sog. Fächerlot verwendet wird, das in seinem Sektor einen Fächer von quer zur Fahrtrichtung eines Wasserfahrzeugs aneinandergereihten und gegen die Vertikale um einen Empfangswinkel geschwenkten Empfangsrichtkeulen oder Empfangsbeams aufspannt, muß zur Erzielung von möglichst geringen absoluten Meßfehlern bei großen Lottiefen in der Lage sein, die Echolaufzeiten mit recht geringen Fehlertoleranzen zu bestimmen. Hierzu trägt wesentlich die exakte Detektion der vom Gewässergrund reflektierten Echos in den vom Empfänger gerichtet empfangenen Empfangssignalen bei.

Bei bekannten Verfahren dieser Art wird die Echodetektion mit den herkömmlichen Methoden der Flanken- oder Schwellwertdiskriminierung durchgeführt. Diese Methoden sind nur dann genau, wenn der Sendeimpuls exakt senkrecht auf den Gewässergrund trifft. Dann ist das Echo ein Abbild des Schallimpulses selbst und die Flanken- oder Schwellwertdiskriminierung führt zu einer sehr genauen zeitlichen Detektion des Echos im Empfangssignal. Trifft hingegen ein Schallimpuls unter einem von der Senkrechten abweichenden Einfallswinkel auf den Gewässergrund, so ist das empfangene Echo kein Abbild des gesendeten Schallimpulses mehr, sondern die Abrollfunktion des Sendeimpulses über den Gewässergrund durch die Empfangsrichtkeule hindurch. Damit erhält man keine diskreten Echos mehr, deren Echolänge der Sendeimpulslänge entspricht, sondern eine Verteilungsfunktion über die Empfangsrichtkeule. Bei einer solchen Verteilungsfunktion sind aber die Methoden der Flanken- oder Schwellwertdiskriminierung fehlerhaft. Solche Abrollfunktionen treten zum einen bei einer vertikalen Empfangsrichtkeule immer dann auf, wenn der Gewässergrund schräg verläuft, also gegenüber einer horizontalen Ebene eine Steigung oder Neigung aufweist, und zum anderen grundsätzlich bei gegenüber der Vertikalen um einen Empfangswinkel geschwenkten Empfangsrichtkeulen mit der einzigen Ausnahme, daß die Empfangsrichtung gerade die Normale auf einem geneigten Gewässergrund ist.

Hinzu kommt ein weiteres Phänomen, das in den technischen Grenzen der Nebenzipfeldämpfung der Empfangsantenne begründet liegt. Da senkrecht auf den Gewässergrund oder Meeresboden auftreffende Sendeimpulse in Sende- oder Empfangsrichtung zurückreflektiert werden, schräg auf den Boden auftreffende Sendeimpulse jedoch streuen oder scattern, ist die Amplitude des Senkrechtechos erheblich größer als die der Schrägechos. Dies führt dazu, daß in dem Empfangssignal auch immer ein Bruchteil des Senkrechtechos enthalten ist, das aufgrund seiner großen Amplitude - wenn auch gedämpft - über die Nebenzipfel empfangen wird. Dieses Senkrecht- oder Nebenzipfelecho
kann in vielen Fällen zu einem Ansprechen des
Schwellwertdiskriminators führen und damit zu einer
extremen Verfälschung der Echodetektion. Dies trifft für
Empfangssignale sowohl aus gegenüber der Vertikalen
geneigten Empfangsrichtkeulen als auch aus der vertikalen
Empfangsrichtkeule zu, soweit in letzterem Fall die
Steigung größer ist als der Tangens des halben
Öffnungswinkels der Empfangsrichtkeule. Bei einer üblichen
Öffnungsbreite des Vertikallots von ca. 4° wäre dies eine
Steigung bzw. ein Gefälle des Gewässergrundes von größer
3,5 % .

Der Erfindung liegt die Aufgabe zugrunde, ein Verfahren
zur Bestimmung der Echolaufzeit der eingangs genannten Art
bezüglich der Genauigkeit und Zuverlässigkeit der
Echodetektion wesentlich zu verbessern.

Die Aufgabe ist bei einem Verfahren zur Bestimmung der
Echolaufzeit der im Oberbegriff des Anspruchs 1
definierten Gattung erfindungsgemäß durch die Merkmale im
Kennzeichenteil des Anspruchs 1 gelöst.

Das erfindungsgemäße Verfahren zeichnet sich durch eine
extrem hohe Genauigkeit in der Bestimmung der Echolaufzeit
der in den Empfangssignalen enthaltenen Bodenechos aus,
und zwar unabhängig von Empfangsrichtung und
Meeresbodenneigung, wie sie mit den bekannten Verfahren
der Flanken- oder Schwellwertdiskriminierung nur bei
reiner Vertikallotung und idealen Verhältnissen, d. h.
horizontaler Meeresbodenverlauf, erreichbar ist. Durch die
Bildung des Schwerpunktintegrals kann das Echo sehr genau
eliminiert und die Echolaufzeit exakt festgelegt werden.

4

0249036

Durch die optimale Anpassung des Echoerwartungsfensters an die Gewässertiefe unter Berücksichtigung der Empfangsrichtung und/oder einer möglichen Hanglage des Gewässergrundes wird ein sehr gutes Nutz-/Störverhältnis erzielt, so daß die durch Scattern in der Amplitude zum Teil erheblich reduzierten Echos, die zudem noch eine Verteilungsfunktion über die von der Empfangsrichtkeule erfaßte Bodenfläche darstellen, sich ausreichend deutlich vom Rauschen abheben. Zum Aufspannen des Echoerwartungsfensters wird eine Echoerwartungszeit vorgegeben, die von einer bekannten Lottiefe abgeleitet wird.

Da üblicherweise eine Anfangslottiefe nicht zur Verfügung steht, wird gemäß einer zweckmäßigen Ausgestaltung des erfindungsgemäßen Verfahrens nach Anspruch 2, insbesondere in Verbindung mit Anspruch 4, zur Ableitung der Echoerwartungszeit nach Aussenden des Schallimpulses auch ein ungerichteter Signalempfang durchgeführt und die Echolaufzeit des im empfangenen Signals ersten Echos, dem sog. Erstecho, bestimmt. Da dieses Erstecho immer von dem auf den Gewässergrund senkrecht auftreffenden Sendeimpuls herrührt, damit ein Abbild des Sendeimpulses selbst ist, und eine relativ große Amplitude aufweist, führt in diesem Fall die herkömmliche Methode der Flanken- oder Schwellwertdiskriminierung zu einer exakten Bestimmung der Erstecholaufzeit. Bei einer reinen Vertikallotung mit einer nur vertikalen Empfangsrichtkeule ist es dabei ausreichend, den Öffnungswinkel der Empfangsrichtkeule zu vergrößern oder bei geringer Bodenneigung das gerichtete Empfangssignal selbst zur Bestimmung der Erstecholaufzeit einer Flanken- oder Schwellwertdiskriminierung zu unterziehen.

Zweckmäßigerweise wird gemäß einer weiteren Ausgestaltung des erfindungsgemäßen Verfahrens nach Anspruch 3 die Echoerwartungszeit in der vorhergehenden Sende- und Empfangsperiode ermittelt. Dadurch kann der über die Empfangsrichtkeule gerichtet durchgeführte Signalempfang auf das Zeitintervall des Echoerwartungsfensters beschränkt werden. Da zur Off-Line-Verarbeitung des Empfangssignals zwecks Echodetektion dieses abgespeichert werden muß, kann damit die Speicherkapazität relativ klein gehalten werden.

In einer weiteren Ausgestaltung des erfindungsgemäßen Verfahrens nach Anspruch 5 oder 6 wird auch die durch Flanken- oder Schwellwertdiskriminierung gewonnene Erstecholaufzeit dazu verwendet, die Echogrenzen dieses Erstechos zu bestimmen. Da dieses Erstecho von der Reflexion des senkrecht auf den schrägen Gewässergrund auftreffenden Schallimpulses herrührt, ist die vordere Grenze dieses Erstechos die Erstecholaufzeit und die hintere Grenze die Summe aus Erstecholaufzeit und Sendeimpulsdauer. Wird nunmehr das über die Empfangsrichtkeule gerichtet empfangene Empfangssignal in diesen Zeitgrenzen entsprechend bedämpft, so ist das Senkrechtecho, das nach den vorstehenden Ausführungen über die Nebenzipfel bei gerichtetem Empfang empfangen wird, aus dem Empfangssignal eliminiert und verfälscht nicht die Schwerpunktberechnung.

Bei reiner Vertikallotung mit nur einer vertikalen Empfangsrichtkeule werden gemäß einer vorteilhaften Ausgestaltung des erfindungsgemäßen Verfahrens die Fenstergrenzen des Echoerwartungsfensters vor und hinter die Echoerwartungszeit gelegt. Der zeitliche Abstand der vorderen und hinteren Fenstergrenze von der Echoerwartungszeit wird dabei vorzugsweise gleich groß gewählt.

Die Fenstergrenzen des Echoerwartungsfensters können dabei gemäß der Ausgestaltung des Verfahrens nach Anspruch 9 zunächst geschätzt, z. B. etwa dem Dreifachen der zu erwartenden maximalen Echolänge oder etwa zu 10 bis 20 % der vermuteten Lottiefe angenommen werden. Bei der folgenden Lotung wird dann die Länge des Echoerwartungsfensters auf etwa die Echolänge reduziert, die bei der vorhergehenden Lotung tatsächlich festgestellt worden ist.

Gemäß einer weiteren Ausgestaltung des erfindungsgemäßen Verfahrens nach Anspruch 10 kann die Länge des Echoerwartungsfensters mit gegenüber der Schätzung wesentlich verbesserter Genauigkeit unter Berücksichtigung des physischen Öffnungswinkels der Antenne und einer maximal angenommenen Hanglage des Gewässergrundes berechnet werden. Da Untersuchungen gezeigt haben, daß auf dem Meeresboden - von ganz wenigen Ausnahmen abgesehen - generell keine größeren Hanglagen vorhanden sind, deren Steigung größer als 25 % ist, kann die Länge des Echoerwartungsfensters zunächst generell in der zu errechnenden Weise festgelegt und bei folgenden Lotungen entsprechend reduziert werden.

Bei Empfang mit einer oder mehreren unter einem Empfangswinkel zur Vertikalen geschwenkten Empfangsrichtkeule bzw. Empfangsrichtkeulen werden die Fenstergrenzen des Echoerwartungsfensters gemäß der Ausgestaltung des erfindungsgemäßen Verfahrens nach Anspruch 12 berechnet. Sie liegen nur in Empfangsrichtkeulen mit relativ kleinen Empfangswinkeln vor und hinter der Echoerwartungszeit. In allen übrigen Fällen liegen beide Fenstergrenzen zeitlich gesehen hinter der Echoerwartungszeit.

Eine zweckmäßige Ausgestaltung des erfindungsgemäßen Verfahrens beim Empfang mit geschwenkten Empfangsrichtkeulen ergibt sich aus Anspruch 13. Durch diese Maßnahmen wird die Genauigkeit der Echodetektion weiter verbessert. Bei der Festlegung der hinteren, zeitlich größeren Fenstergrenze des Echoerwartungsfensters wird zusätzlich die physische Öffnungscharakteristik der Empfangsrichtkeule berücksichtigt. Da das empfangene Echo eine Abrollfunktion des Sendeimpulses über die von der Empfangsrichtkeule am Gewässergrund ausgeschnittene Bodenfläche darstellt, wird die hintere Fenstergrenze so dimensioniert, daß der Sendeimpuls innerhalb des Echoerwartungsfensters auch die gesamte, durch die Öffnungscharakteristik der Antenne vorgegebene Bodenfläche beleuchten kann und kein Echoabschnitt durch vorzeitiges Schließen des Echoerwartungsfensters verlorengeht.

Zweckmäßige Vorrichtungen zur Durchführung des erfindungsgemäßen Verfahrens mit vorteilhaften Ausführungsformen ergeben sich aus den weiteren Ansprüchen 16 bis 21, wobei die Vorrichtung gemäß Anspruch 16 und 17 speziell auf ein Vertikallot zur Tiefenlotung und die Vorrichtung gemäß Anspruch 18 und 19 auf ein Fächerlot zur Oberflächenvermessung des Meeresbodens zugeschnitten ist.

Die Erfindung ist anhand von Ausführungsbeispielen mit Hilfe der Zeichnung im folgenden näher erläutert. Es zeigen:

Fig. 1 eine schematische, teilweise perspektivische Ansicht einer von einem Fächer-Echolot eines Vermessungsschiffes erzeugten Beleuchtung eines Gewässergrundes,

Fig. 2 eine schematische Darstellung von Empfangsrichtungen des Fächer-Echolots in Fig. 1 unter Berücksichtigung von maximal angenommenen Hanglagen des Gewässergrundes,

Fig. 3 ein Diagramm der vorderen und hinteren Fenstergrenze eines Echoerwartungsfensters in Abhängigkeit von dem Winkel $\psi$ der Empfangsrichtung,

Fig. 4 eine schematische Darstellung einer von dem Fächer-Echolot unter einem Empfangswinkel $\psi$ ausgehenden Empfangsrichtkeule mit dem Öffnungswinkel $2\vartheta$ ,

Fig. 5 ein Blockschaltbild einer Empfangsvorrichtung des Fächer-Echolots in Fig. 1,

Fig. 6 ein Blockschaltbild eines Echodiskriminators in Fig. 5,

Fig. 7 ein Diagramm eines durch ein Echoerwartungsfenster begrenzten Empfangssignals.

Fig. 8 eine schematische, teilweise perspektivische Ansicht einer von einem Vertikal-Echolot erzeugten Beleuchtung eines Gewässergrundes,

Fig. 9 eine schematische Darstellung der vertikalen Empfangsrichtkeule des Echolots in Fig. 8 unter Berücksichtigung von maximal
angenommenen Hanglagen des Gewässergrundes,

Fig. 10  ein Blockschaltbild einer
Empfangsvorrichtung des Echolots in Fig. 8,

Fig. 11  ein Blockschaltbild eines Echodiskriminators

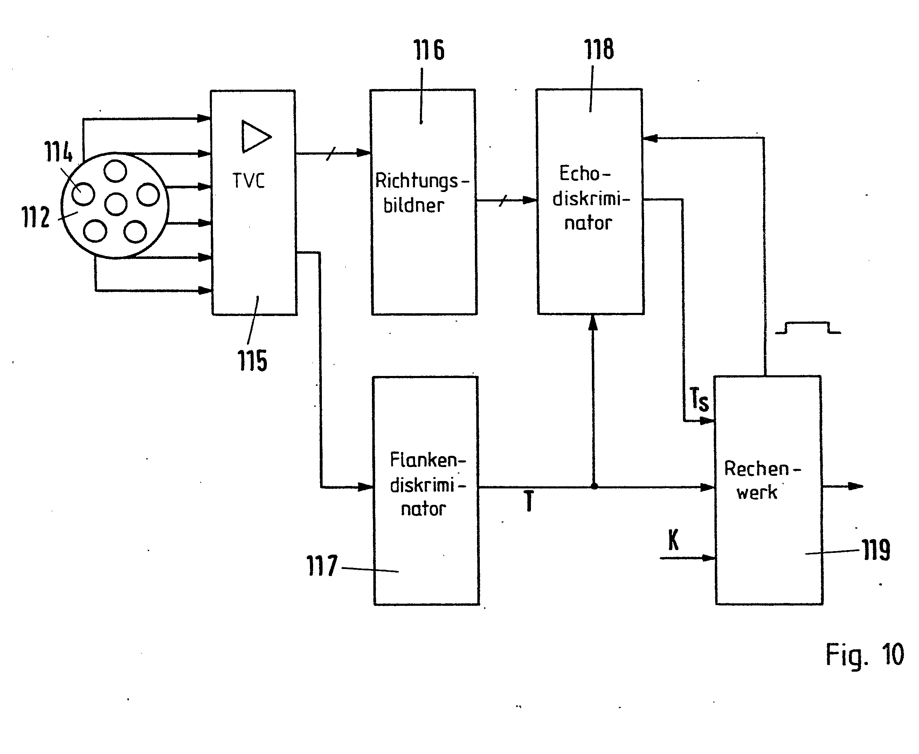

in Fig. 10,

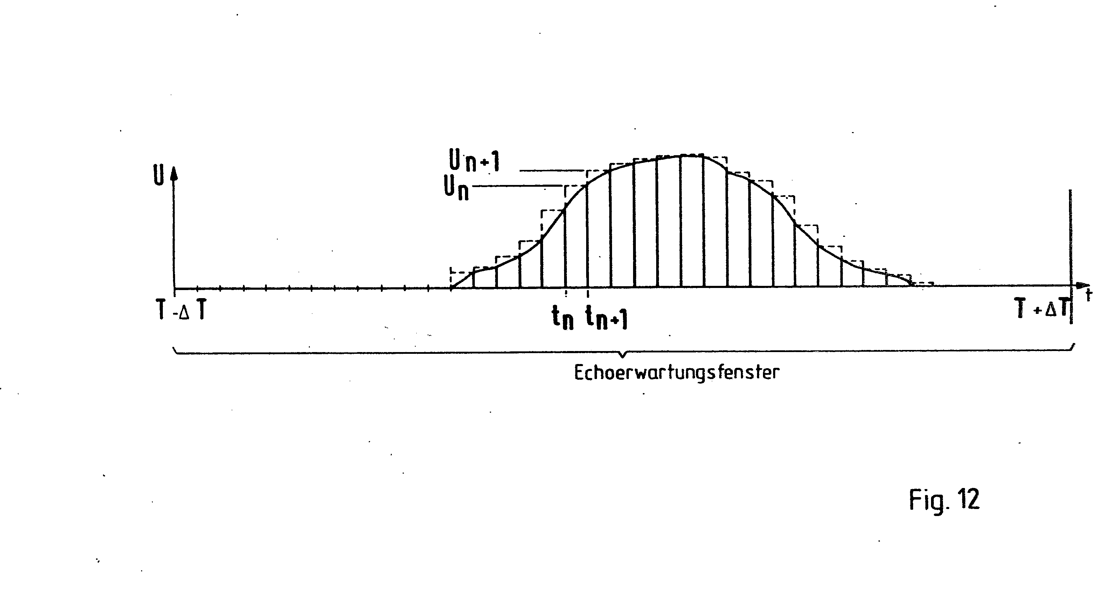

Fig. 12  ein Diagramm eines durch ein
Echoerwartungsfenster begrenzten
Empfangssignals.

Bei einem Verfahren zur akustischen Vermessung des
Oberflächenprofils des Meeresbodens wird ein an sich
bekanntes sog. Fächer-Echolot mit einer Sende- und
Empfangsvorrichtung verwendet, das am Boden eines
Wasserfahrzeugs, hier eines Oberflächenschiffes 10,
installiert ist. Anordnung und Ausbildung der Sende- und
Empfangsvorrichtung des Echolots, auf dessen Darstellung
hier verzichtet worden ist, kann so getroffen sein, wie
dies in der US-PS 31 44 631 beschrieben ist.

Mit der Sendevorrichtung wird ein im wesentlichen lotrecht
unter dem Schiff 10 quer zu dessen Fahrtrichtung liegender
Senderzielstreifen 11 auf dem Meeresboden 12 mit
Schallimpulsen beschallt. Durch eine entsprechende
Ausbildung der Sendeantenne, z. B. als Lineararray,
und/oder durch elektronische Richtungsbildung ist der von
der Sendevorrichtung ausgehende mit 13 angedeutete Sendebeam so gebündelt, daß sein Öffnungswinkel $2\vartheta_{-3}$ in
Fahrtrichtung des Schiffes 10 ungefähr 1° und quer zur
Fahrtrichtung ungefähr 60° bis 90° aufweist.

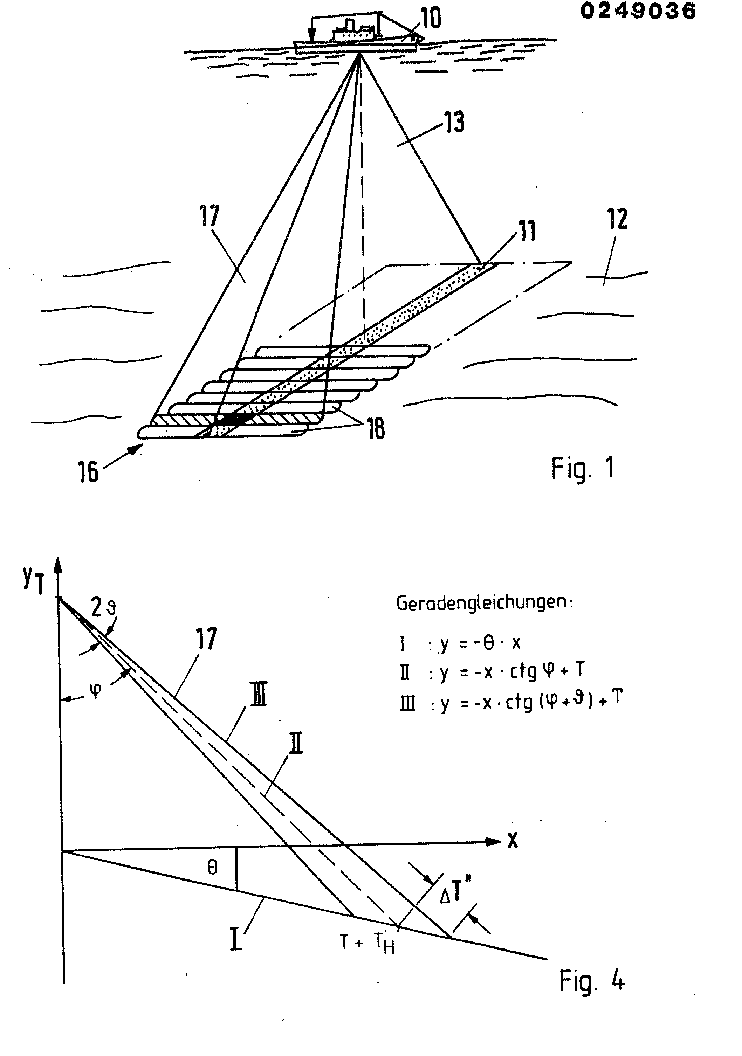

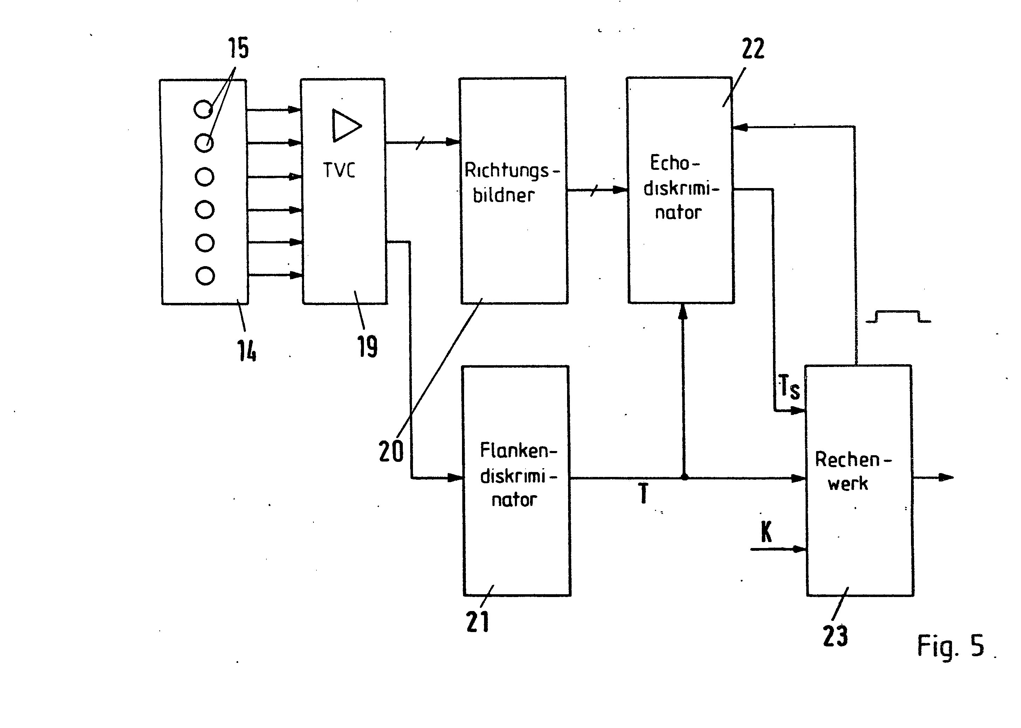

Die im Senderzielstreifen 11 durch Reflexion am
Meeresboden 12 entstehenden Echos werden von der
Empfangsvorrichtung richtungsselektiv empfangen. Wie in
Fig. 5 schematisch dargestellt ist, weist die
Empfangsvorrichtung hierzu eine Empfangsantenne 14 mit
einer Vielzahl äquidistant angeordneter,
elektroakustischer Wandler 15 auf. Durch entsprechende
elektronische Verarbeitung der Empfangssignale der
einzelnen Wandler 15 wird erreicht, daß die
Empfangsvorrichtung einen Fächer 16 von in Fahrtrichtung
sich erstreckenden, quer zur Fahrtrichtung
aneinandergereihten schmalen Empfangsbeams 17 aufspannt,
die am Meeresboden 12 Empfängerstreifen 18 begrenzen, wie
sie in Fig. 1 skizziert sind. Der Öffnungswinkel $2\vartheta_{-3}$
der Empfangsbeams 17 beträgt in Fahrtrichtung etwa 15° und
quer dazu ungefährt 1°. Die Empfangsvorrichtung ist
relativ zu der Sendevorrichtung so angeordnet, daß der
Senderzielstreifen 11 von dem Fächer 16 der
Empfängerstreifen 18 überdeckt wird. Im Fächer 16 sind
dabei etwa 64 Empfangsbeams 17 vorhanden.

Zur Gewinnung des Oberflächenprofils des Meeresbodens 12
werden nunmehr in bekannter Weise Schallimpulse
ausgesendet und der Senderzielstreifen 11 am Meeresboden
12 akustisch beleuchtet. Über die Empfangsbeams 17 werden
richtungsselektiv Empfangssignale erfaßt. In diesen
Empfangssignalen sind die von dem Schallimpuls am
Meeresboden 12 ausgelösten Echos enthalten. Diese Echos
werden in den einzelnen Empfangssignalen detektiert, die
Echolaufzeit vom Meeresboden 12 zu der
Empfangsvorrichtung, die gleich der halben Zeitspanne vom
Aussenden des Sendeimpulses bis zum Eintreffen der Echos
ist, bestimmt und daraus unter Berücksichtigung der
momentanen Schallgeschwindigkeit in Wasser Tiefenpunkte
des Meeresbodens 12 bestimmt, die in Zuordnung zu dem jeweiligen Ursprungsort der Echos ein Meßprofil des
Meeresbodens 12 in dem Bereich des Senderzielstreifens 11
ergeben. Die in Vorschub- oder Fahrtrichtung des
Schiffes 10 erhaltene Vielzahl von einzelnen Meßprofilen
bildet räumlich aneinandergereiht das Oberflächenprofil
des Meeresbodens 12 im Vermessungsgebiet längs einer sog.
Vermessungsspur.

Die Empfangsvorrichtung des Fächer-Echolots ist in Fig. 5
im Blockschaltbild dargestellt. Die elektroakustischen
Wandler 15 sind über einen zeitabhängigen
Verstärkungsregler 19 einerseits mit einem
Richtungsbildner 20 und andererseits mit einem
Flankendiskriminator 21 verbunden. In dem
Verstärkungsregler 19 wird die entfernungsabhängige
Dämpfung der Amplituden der Echos kompensiert, so daß die
einlaufenden Echos eine von der Länge des
Ausbreitungsweges im Wasser unabhängige Amplitude
aufweisen. Der Richtungsbildner 20 bildet aus den
verstärkten Ausgangssignalen der Wandler 15 eine Vielzahl,
hier 64, von Empfangsrichtkeulen oder Empfangsbeams 17,
wie sie vorstehend bereits angesprochen sind. Der
Flankendiskriminator 21, der z. B. ein einfacher
Schwellwertschalter sein kann, detektiert in den
Ausgangssignalen der Wandler 15 das von allen Echos
zeitlich zuerst eintreffende Erstecho und gibt dessen
Echolaufzeit T aus. Diese Echolaufzeit T wird einerseits
einem Echodiskriminator 22 und andererseits einem
Rechenwerk 23 zugeführt. Der Echodiskriminator 22 ist mit
dem Richtungsbildner 20 verbunden und detektiert - wie
noch im einzelnen erläutert wird - die in den
Empfangssignalen der einzelnen Empfangsbeams 17
enthaltenen Echos und bestimmt die Echolaufzeiten dieser
Echos. Hierzu erhält er von dem Rechenwerk 23 die
Zeitgrenzen eines adaptiven Echoerwartungsfensters angeliefert. Die Echolaufzeiten werden von dem Echodiskriminator 22 dem Rechenwerk 23 zugeführt, das hieraus die Tiefenwerte ermittelt und in Zuordnung zu dem Ursprungsort der Echos das Meßprofil im Bereich des Senderzielstreifens 11 ausgibt.

Zur Detektion der Echos in den einzelnen Empfangssignalen der Empfangsbeams 17 wird um eine Echoerwartungszeit ein zeitliches Erwartungsfenster aufgespannt. Als Echoerwartungszeit wird dabei die von dem Flankendiskriminator 21 gelieferte Echolaufzeit T des Erstechos verwendet. Die zeitlichen Fenstergrenzen des Echoerwartungsfensters werden dabei in Abhängigkeit von dem Empfangswinkel $\varphi$ der Empfangsrichtkeule oder des Empfangsbeams 17 und einer maximal angenommenen Hanglage des Meeresbodens 12 in Richtung des Empfangsbeams 17 bemessen.

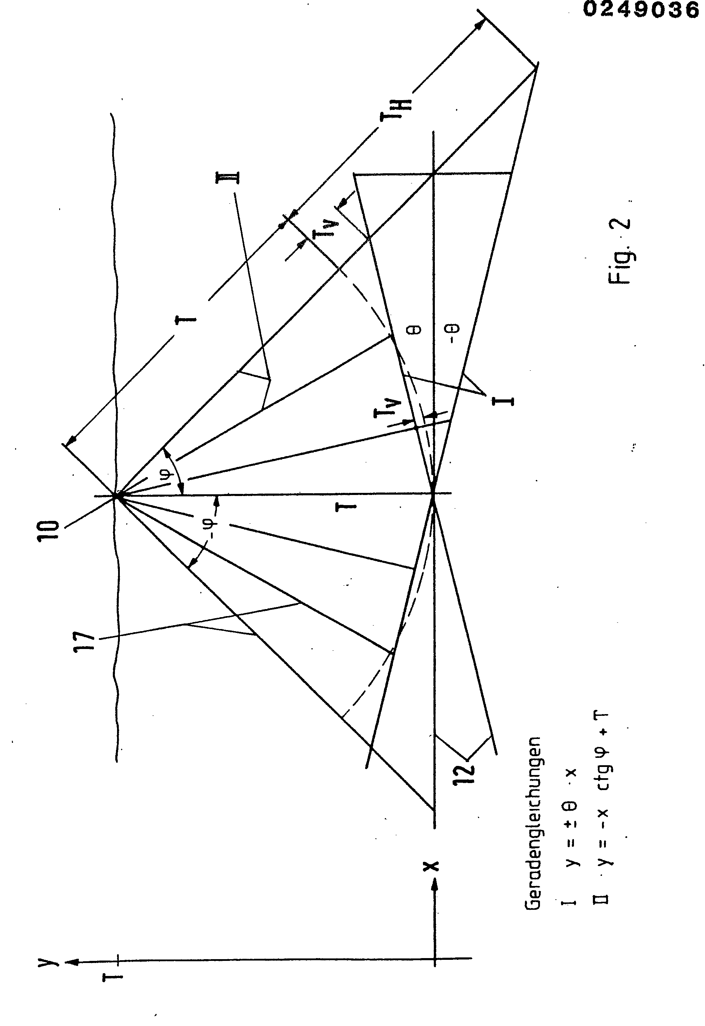

In Fig.2 sind schematisch mehrere Empfangsbeams 17, die unter einem Empfangswinkel $\varphi$ liegen, dargestellt. Die Hanglage des Meeresbodens 12 ist dabei mit einer Steigung $+ \Theta$ bzw. einem Gefälle $- \Theta$ eingezeichnet. Aufgrund dieser geometrischen Verhältnisse wird die vordere Zeitgrenze $T_V$ des Echoerwartungsfensters gemäß

$$T_V = T \left[ \frac{1}{\cos \varphi} \left( 1 - \frac{1}{1 + \frac{1}{\Theta} \, ctg \, \varphi} \right) - 1 \right] \qquad (1)$$

und die hintere Fenstergrenze $T_H$ des Echoerwartungsfensters gemäß

$$T_H = T \left[ \frac{1}{\cos \varphi} \left( 1 - \frac{1}{1 - \frac{1}{\Theta} \, ctg \, \varphi} \right) - 1 \right] \qquad (2)$$

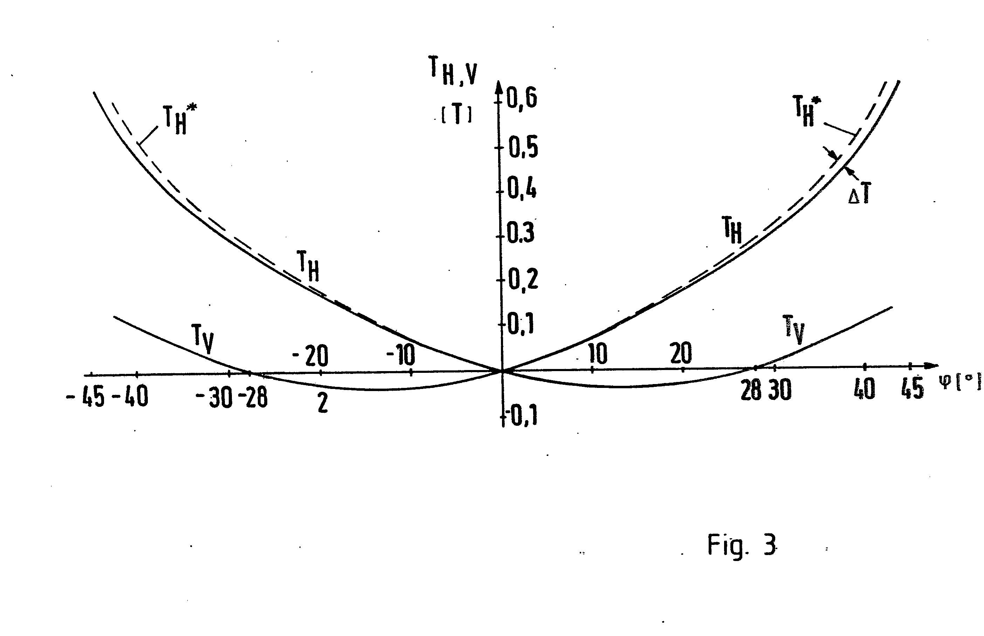

berechnet. T ist dabei die Echoerwartungszeit, die hier der von dem Flankendiskriminator 21 gelieferten Echolaufzeit T des ersten Echos gewählt ist. Die auf T normierten Fenstergrenzen $T_V$ und $T_H$ sind in Fig. 3 in Abhängigkeit von dem Empfangswinkel $\varphi$ für positive (in Fig. 2 rechts) und für negative (in Fig. 2 links) Empfangswinkel $\varphi$ dargestellt. Die Differenz $T_H - T_V$ ergibt die Fensterlänge des Echoerwartungsfensters, das um die Echoerwartungszeit T (in Fig. 3 die $\varphi$-Achse) aufgespannt wird. Bei dem Diagramm der Fenstergrenzen $T_V$ und $T_H$ in Fig. 3 in Abhängigkeit von dem Empfangswinkel $+\varphi$ bzw. $-\varphi$ ist die Hanglage des Meeresbodens 12 mit einer Steigung $\Theta = \pm 25$ % angenommen. In der Praxis hat sich gezeigt, daß eine größere Steigung oder ein größeres Gefälle des Meeresbodens, von einigen Ausnahmen abgesehen, nirgends auftritt.

Bei der Festlegung der hinteren, zeitlich größeren Fenstergrenze $T_H$ des Echoerwartungsfensters ist zu berücksichtigen, daß die Empfangsbeams 17 nicht unendlich schmal sind, sondern einen Öffnungswinkel quer zur Fahrtrichtung von ca. 1° aufweisen. Ein solcher Empfangsbeam ist in Fig. 4 schematisch dargestellt, wobei sein Empfangswinkel mit $\varphi$ und sein Öffnungswinkel mit $2\eta$ bezeichnet ist. Da, wie einleitend bereits beschrieben, das über dem Empfangsbeam 17 empfangene Echo kein Abbild des ausgesandten Schallimpulses, sondern eine Abrollfunktion des Schallimpulses über den vom Empfangsbeam 17 erfaßten Abschnitt des Meeresbodens 12 darstellt, ist bei der Bemessung der hinteren Fenstergrenze $T_H$ eine maximal mögliche Echolänge zu beachten. Diese Echolänge ist von der Geometrie des vom Empfangsbeam 17 am Meeresboden 12 erfaßten Flächenabschnittes abhängig und somit von dem

Empfangswinkel $\varphi$ des Empfangsbeams 17, dem
Öffnungswinkel $2\vartheta$ des Empfangsbeams 17 und vom Gefälle
$-\Theta$ der maximal angenommenen Hanglage des Meeresbodens 12.
Unter Berücksichtigung dieser Abhängigkeiten wird die
hintere Fenstergrenze $T_H$ um ein Zeitinkrement $\Delta T''$ zu
größeren Zeiten hin verschoben, wobei sich das
Zeitinkrement $\Delta T''$ gemäß

$$\Delta T'' = T \left[ \frac{1}{\cos(\varphi + \vartheta)} \left(1 - \frac{1}{1 - \frac{1}{\Theta}\,ctg(\varphi + \vartheta)}\right) - \frac{1}{\cos\varphi} \left(1 - \frac{1}{1 - \frac{1}{\Theta}\,ctg\,\varphi}\right) \right] \quad (3)$$

berechnet. Die korrigierte hintere Zeitgrenze $T^*_H$ ergibt
sich somit aus der Addition des Zeitinkrements $\Delta T''$ zu der
hinteren Fenstergrenze $T_H$ gemäß

$$T^*_H = T_H + \Delta T'' \quad (4)$$

Die korrigierte hintere Fenstergrenze $T^*_H$ ist, normiert
auf die Echoerwartungszeit T, in Fig. 3 ebenfalls in
Abhängigkeit von den Empfangswinkeln $\varphi$ der Empfangsbeams
17 dargestellt. Die tatsächliche Fensterlänge ergibt sich
damit aus der Differenz der korrigierten hinteren
Fenstergrenze $T^*_H$ und der vorderen Fenstergrenze $T_V$. Diese
Fenstergrenzen werden von dem Rechenwerk 23 für jeden
Empfangswinkel $\varphi$ der 64 Empfangsbeams 17 gemäß den
angegebenen Gleichungen berechnet und dem
Echodiskriminator 22 zugeführt.

In dem Echodiskriminator 22 werden für jeden Empfangsbeam 17 von dem durch das Echoerwartungsfenster begrenzten Empfangssignal das Schwerpunktintegral gebildet. Allgemein lautet das Schwerpunktintegral:

$$T_S = \frac{1}{A} \int_{T_V}^{T^*_H} \cdot \, T dA \qquad (5),$$

wobei dA ein Flächenelement des Empfangssignals und T die Zeitvariable ist. Die Zeitkomponente $T_S$ des so gefundenen Schwerpunktes ergibt die Echolaufzeit für das detektierte Echo. Um die Sicherheit der Detektion zu vergrößern, werden nach dem Auffinden des ersten Schwerpunktes die Integrationsgrenzen, ausgehend von den Zeitgrenzen $T_V$ und $T^*_H$ des Echoerwartungsfensters reduziert, und zwar symmetrisch zu dem zuerst gefundenen Schwerpunkt $T_S$. Diese Prozedur wird mehrmals mit weiterer Reduzierung der Integrationsgrenzen durchgeführt, so daß die Echodetektion und die Echolaufzeitbestimmung mit einer nur sehr kleinen Fehlertoleranz behaftet sind.

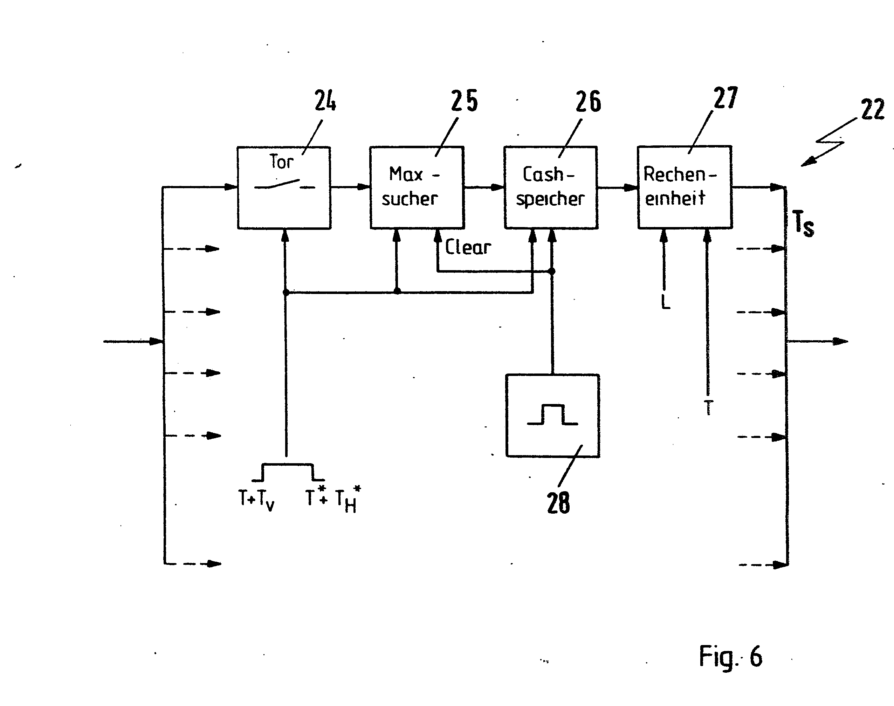

Der Aufbau des Echodiskriminators 22 ist im einzelnen in Fig. 6 dargestellt. Für jeden von dem Richtungsbildner 20 gelieferten Richtungskanal, der einem Empfangsbeam 17 entspricht, sind die gleichen Bauelemente in gleicher Schaltungsanordnung vorgesehen, so daß in Fig. 6 dies nur für einen einzigen Empfangsbeam oder Richtungskanal dargestellt ist.

Am Ausgang des Richtungskanals des Richtungsbildners 20 ist eine Torschaltung 24 angeschlossen, an deren Steuereingang ein Toröffnungsimpuls liegt. Dieser Toröffnungsimpuls legt das Echoerwartungsfenster fest, in welchem das über den Richtungskanal aufgefaßte Empfangssignal zur Echodetektion erfaßt und abgespeichert wird. Da das Echoerwartungsfenster um die Echoerwartungszeit T aufgespannt wird, beträgt die vordere Impulsgrenze $T + T_V$ und die hintere Impulsgrenze $T + T^*_H$. In dieser Zeit ist die Torschaltung 24 durchgeschaltet und das Empfangssignal liegt an einem der Torschaltung 24 nachgeschalteten Maximumsucher 25. Da die Begrenzung des auszuwertenden Empfangssignals On-Line während der Empfangsperiode durchgeführt wird, müssen die Fenstergrenzen des Echoerwartungsfensters zum Zeitpunkt der Toröffnung bereits festgelegt sein. Aus diesem Grund wird für die Echoerwartungszeit T die vom Flankendiskriminator 21 in der unmittelbar vorhergehenden Sende- und Empfangsperiode ausgegebene Echolaufzeit T des Erstechos verwendet.

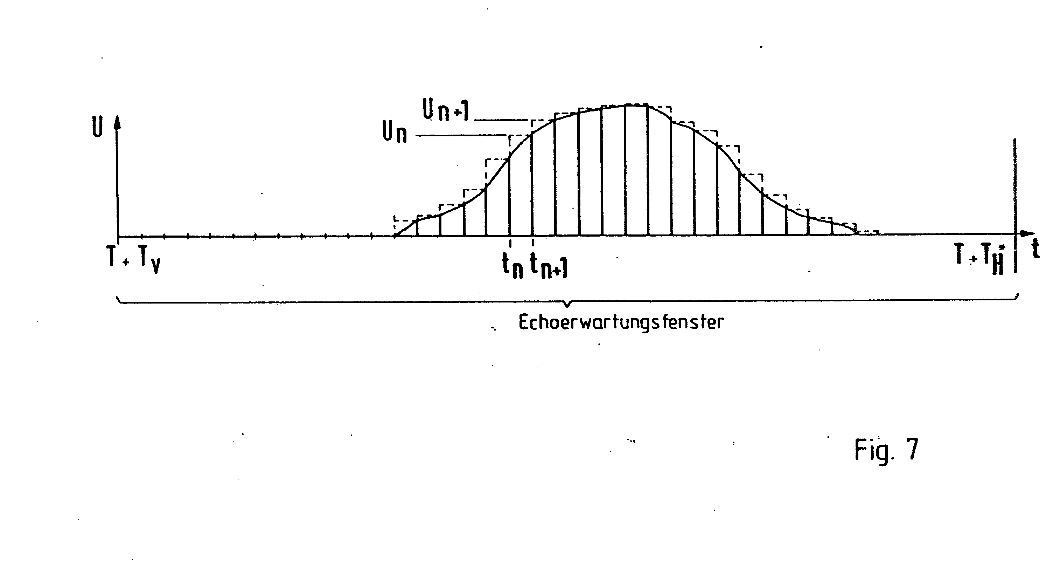

In Fig. 7 ist beispielhaft ein durch das Echoerwartungsfenster begrenztes Empfangssignal, wie es an dem Maximumsucher 25 ansteht, dargestellt. Auf die Einbeziehung von evtl. Störungen oder des immer vorhandenen Rauschens im Empfangssignal ist aus Gründen der Übersichtlichkeit verzichtet worden. Da bereits die Richtungsbildung im Richtungsbildner 20 durch digitale Signalverarbeitung erzeugt wird, liegt das in Fig. 7 analog dargestellte Empfangssignal in Form von diskreten Werten vor. Dem Maximumsucher 25 ist ein Cash-Speicher 26 nachgeschaltet, an dem wiederum eine Recheneinheit 27 angeschlossen ist. Der Sample-Takt für den Maximumsucher 25, der gleich der Einschreibfrequenz des Cash-Speichers 26 ist, wird von einem Taktgenerator 28 geliefert. Der Sample-Takt wird dabei an die Fensterlänge des Echoerwartungsfensters adaptiert und ist entsprechend dem Verhältnis von Kapazität des Cash-Speichers 26 zur Fensterlänge bemessen.

Der Maximumsucher 25 sucht aus einer durch den Sample-Takt vorgegebenen Anzahl von diskreten Werten des Empfangssignals den Maximalwert aus. Mit dem Sample-Takt wird dieser Maximalwert in den Cash-Speicher 26 eingeschrieben. Mit dem Einschreiben wird gleichzeitig der Maximumsucher 25 gecleart, so daß er nunmehr nachfolgend aus der nächsten Anzahl von diskreten Werten des Empfangssignals den Maximalwert eliminiert. Der Cash-Speicher 26 wird während der Toröffnungszeit der Torschaltung 24 mit diesen Sample-Werten gefüllt. Sperrt die Torschaltung 24 wieder, so ist der Cash-Speicher 26 vollständig aufgefüllt, beispielsweise mit 1024 Samples, die exakt auf die Fensterlänge des Echoerwartungsfensters aufgeteilt sind.

Mittels der Recheneinheit 27 werden nunmehr Off-Line, die im Cash-Speicher 26 enthaltenen Speicherwerte ausgelesen und das Schwerpunktintegral gemäß

$$T_S = (T + T_V) + \frac{\sum\limits_{n=1}^{N} U_n(t) \cdot t_n}{\sum\limits_{n=1}^{N} U_n(t)} \cdot C \qquad (6)$$

gebildet, wobei U die Amplitude (Spannung) des Empfangssignals und $t_n$ das durch den Sample-Takt festgelegte Zeitinkrement ist. $U_n$ sind dabei die im Cash-Speicher 26 abgelegten Abtastwerte, während $t_n$ der Speicheradresse des Cash-Speichers 26 entspricht. Die Konstante C berücksichtigt, daß anstelle eines Flächenelements $U_n(t) \cdot \Delta t$ lediglich die Spannung $U_n(t)$ bei der Schwerpunktsberechnung verwendet wird. Wird $t = 1$ gewählt, ist $C = 1$. Die Zeitkomponente $T_S$ des Schwerpunktes wird dem Rechenwerk 23 zugeführt, das daraus mit einer ihm zugeführten Korrektur- und Skalierungsgröße K die Tiefenpunkte berechnet. Die Größe K berücksichtigt Schallgeschwindigkeit, Ausbreitungsanomalien und einen in Eichmessungen gefundenen Kalibrierungsfaktor.

Wie eingangs bereits dargelegt, wird über jede Empfangsrichtkeule durch die immer vorhandenen Nebenzipfel der Antennencharakteristik ein Bruchteil des sog. Senkrechtechos - das ist ein von einem senkrecht auf dem Meeresboden 12 auftreffenden Schallimpuls ausgelöstes Echo - empfangen. Liegt dieses Senkrechtecho innerhalb des Echoerwartungsfensters, so geht dieses Senkrechtecho bei der Bildung des Schwerpunktintegrals mit ein und verfälscht die Echodetektion. Wie aus Fig. 3 ersichtlich ist, wird dieses Senkrechtecho bei einer zugelassenen Hanglage mit einer Steigung von $\Theta = \pm\ 25$ % im Echoerwartungsfenster derjenigen Empfangssignale enthalten sein, die unter einen Empfangswinkel $\Psi$ zwischen 0° und ca. 28° empfangen werden. In diesem Bereich hat die vordere Grenze $T_V$ des Echoerwartungsfensters in Fig. 3 einen negativen Wert, was bedeutet, daß das Echoerwartungsfenster zu einem Zeitpunkt geöffnet wird, der kleiner als die Echoerwartungszeit T ist. Da die Echoerwartungszeit T aber gleich der vom Flankendiskriminator 21 ausgegebenen Echolaufzeit des sog. Erstechos ist, das identisch ist mit dem Senkrechtecho, ist in dem genannten Empfangswinkelbereich die Echodetektion mit einem relativ großen Fehler behaftet. Um diesen zu eliminieren, wird die vom Flankendiskriminator 21 ausgegebene Echolaufzeit T des Erstechos der Recheneinheit 27 zugeführt. Da gleichzeitig die Recheneinheit 27 die Zeitdauer oder Zeitlänge L des Sendeimpulses kennt, werden bei der Schwerpunktintegralbildung die im Cash-Speicher 26 in dem Zeitbereich T bis T+L enthaltenen Abtastwerte in ihrer

0249036

Größe um einen vorgegebenen Betrag reduziert, was einer
Dämpfung des Empfangssignals in diesem Zeitbereich T bis
T+L gleichkommt. Auf diese Weise ist der Einfluß des über
die Nebenzipfel empfangenen Senkrechtechos eliminiert und
die Fehlertoleranz bei der Echodetektion auch in diesem
Empfangswinkelbereich auf das gleiche Maß zurückgeführt,
wie bei größeren Empfangswinkeln $\varphi$ , im Beispiel der Fig.
3 größer 28°.

Bei einem Verfahren zur Tiefenlotung in Wasser wird ein an
sich bekanntes Echolot mit einer Sende- und
Empfangsvorrichtung verwendet, die Schallimpulse zu einem
Gewässergrund 110 hin aussendet und die am Gewässergrund
110 durch Reflexion der Schallimpulse entstehenden Echos
über eine vertikale Empfangsrichtkeule 111 mit einem
physischen Öffnungswinkel 2 $\vartheta$ empfängt. Üblicherweise wird
zum Senden und Empfangen die gleiche Antenne 112 (Fig. 10)
verwendet, so daß auch die ausgesendete Schallenergie
längs der gleichen Richtkeule abgestrahlt wird. Die
Antenne 112 des Echolots ist am Kiel eines
Wasserfahrzeugs, hier eines Oberflächenschiffes 113,
angeordnet. Auf die Darstellung der an sich bekannten
Sendevorrichtung ist hier verzichtet worden. Die
Empfangsvorrichtung ist in Fig. 10 dargestellt.

Die Empfangsantenne 112 weist eine Vielzahl
elektroakustischer Wandler 114 auf, die über einen
zeitabhängigen Verstärkungsregler (TVC) 115 einerseits mit
einem Richtungsbildner 116 und andererseits mit einem
Flankendiskriminator 117 verbunden sind. In dem
Verstärkungsregler 115 wird die entfernungsabhängige
Dämpfung der Amplituden der Echos kompensiert, so daß die
einlaufenden Echos eine von der Länge des
Ausbreitungsweges im Wasser unabhängige Amplitude
aufweisen. Bei entsprechender geometrischer Anordnung der Wandler 114 kann es zur Erzielung des gewünschtes
Öffnungswinkels der Empfangsrichtkeule 111 ausreichend
sein, den Richtungsbildner 116 als einfaches Summierwerk
auszubilden. Zur Verbesserung der Öffnungscharakteristik
können die Ausgangssignale der Wandler 114 noch in
unterschiedlicher Weise zeitverzögert werden. Dem
Flankendiskriminator 117, der z. B. ein einfacher
Schwellwertschalter sein kann, wird entweder das
Summensignal aller Wandler oder einer Wandlergruppe oder
das Ausgangssignal eines einzigen Wandlers 114 zugeführt.
Er detektiert in dem ihm zugeführten Eingangssignal das
zeitlich zuerst eintreffende Erstecho und gibt dessen
Echolaufzeit T aus. Diese Echolaufzeit T wird einerseits
einem Echodiskriminator 118 und andererseits einem
Rechenwerk 119 zugeführt. Der Echodiskriminator 118 ist
mit dem Richtungsbildner 116 verbunden und detektiert
- wie noch im einzelnen erläutert wird - die in den
Empfangssignalen der vertikalen Empfangsrichtkeule 111
bzw. des Empfangsbeams 111 enthaltenen Echos und bestimmt
die Echolaufzeiten dieser Echos. Hierzu erhält der
Echodiskriminator 118 von dem Rechenwerk 119 die
Zeitgrenzen eines adaptiven Echoerwartungsfensters
angeliefert. Die vom Echodiskriminator 118 ermittelten
Echolaufzeiten $T_S$ werden wieder dem Rechenwerk 123
zugeführt, das hieraus die Tiefenwerte ermittelt und in
Zuordnung zu dem Ursprungsort der Echos das Tiefenprofil
ausgibt.

Zur Detektion der Echos in den einzelnen Empfangssignalen
des Empfangsbeams 111 wird um eine Echoerwartungszeit T
ein zeitliches Erwartungsfenster aufgespannt. Als
Echoerwartungszeit wird dabei die vom Flankendiskriminator
117 gelieferte Echolaufzeit T des Erstechos verwendet. Die
zeitlichen Fenstergrenzen des Echoerwartungsfensters
werden damit in Abhängigkeit von einer maximal

angenommenen Hanglage $\Theta$ des Meeresbodens 110 bemessen.

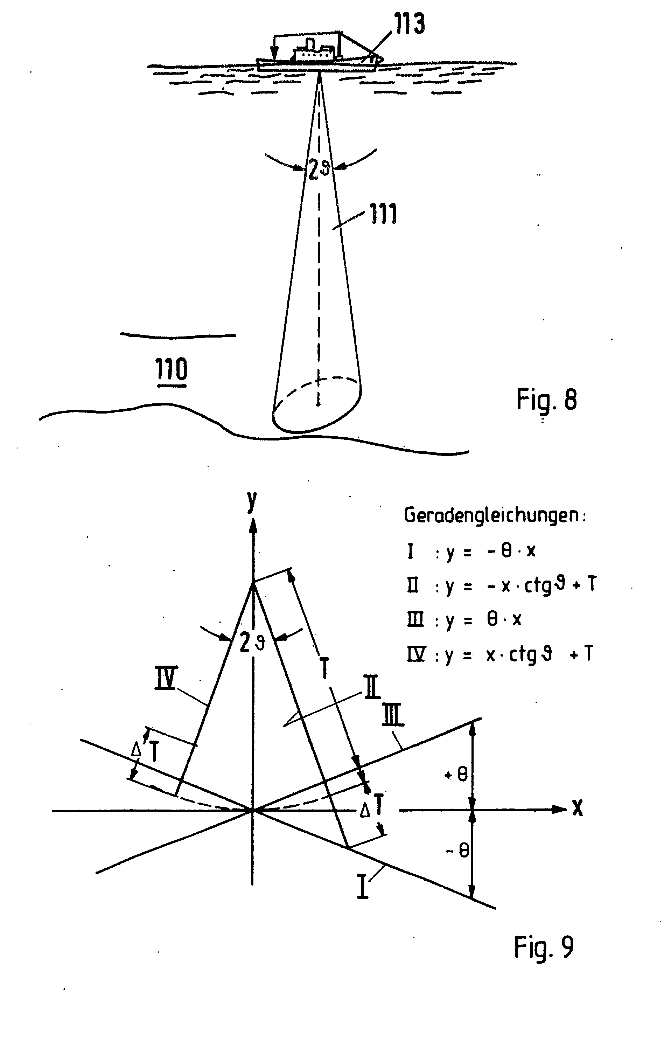

In Fig. 9 ist schematisch der Empfangsbeam 111 dargestellt. Die Hanglage des Meeresbodens 112 ist dabei mit einer Steigung + $\Theta$ bzw. einem Gefälle - $\Theta$ eingezeichnet. Aufgrund dieser geometrischen Verhältnisse wird der zeitliche Abstand $\Delta T$ der Fenstergrenzen vor und hinter der Echoerwartungszeit gemäß

$$\Delta T = T \left\{ \frac{1}{\cos \vartheta} \left( 1 - \frac{1}{1 - \frac{1}{\Theta} \operatorname{ctg} \vartheta} \right) - 1 \right\} \qquad (7)$$

festgelegt. T ist dabei die Echoerwartungszeit, die hier gleich der von dem Flankendiskriminator 117 gelieferten Echolaufzeit T des Erstechos gewählt ist, und $\vartheta$ ist der halbe Öffnungswinkel des Empfangsbeams 111. Zur Berechnung der Fenstergrenzen wird die maximale Hanglage $\Theta$ des Meeresbodens 110 mit 25 % angenommen. Es hat sich in der Praxis gezeigt, daß eine größere Steigung oder ein größeres Gefälle des Meeresbodens - von einigen Ausnahmen abgesehen - nirgends auftritt.

In dem Echodiskriminator 118 wird von dem durch das Echoerwartungsfenster begrenzten Empfangssignal das Schwerpunktintegral gebildet. Allgemein lautet das Schwerpunktintegral

$$T_S = \frac{1}{A} \int_{-\Delta T}^{\Delta T} T dA \qquad (8),$$

wobei dA ein Flächenelement des Empfangssignals und T die
Zeitvariable ist. Die Zeitkomponente $T_S$ des so gefundenen
Schwerpunktes ergibt die Echolaufzeit für das detektierte
Echo. Um die Sicherheit der Detektion zu vergrößern,
werden nach Auffinden des ersten Schwerpunktes die
Integrationsgrenzen, ausgehend von den Zeitgrenzen $T-\Delta T$
und $T+\Delta T$ des Echoerwartungsfensters reduziert, und zwar
symmetrisch zu der Zeitkomponente $T_S$ des zuerst gefundenen
Schwerpunktes. Diese Prozedur wird mehrmals mit weiterer
Reduzierung der Integrationsgrenzen durchgeführt, so daß
die Echodetektion und die Echolaufzeitbestimmung mit einer
nur sehr kleinen Fehlertoleranz behaftet sind.

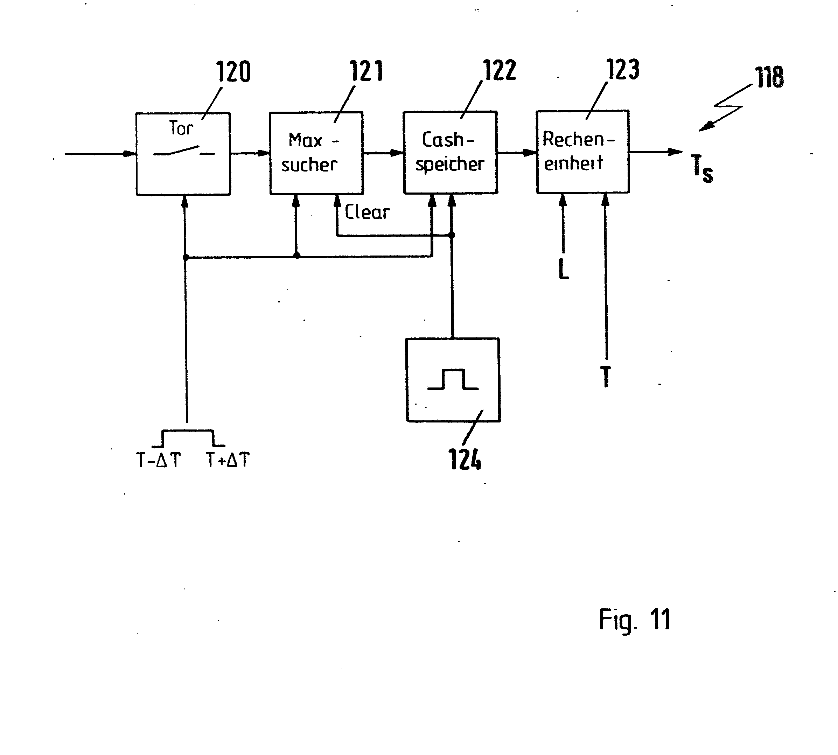

Der Aufbau des Echodiskriminators 118 ist im einzelnen in
Fig. 11 dargestellt. Am Ausgang des Richtungsbildners 116
ist eine Torschaltung 120 angeschlossen, an deren
Steuereingang ein Toröffnungsimpuls liegt. Dieser
Toröffnungsimpuls legt das Echoerwartungsfenster fest, in
welchem das über den Empfangsbeam 111 aufgefaßte
Empfangssignal zur Echodetektion erfaßt und abgespeichert
wird. Da das Echoerwartungsfenster um die
Echoerwartungszeit T aufgespannt wird, beträgt die vordere
Impulsgrenze $T-\Delta T$ und die hintere Impulsgrenze $T+\Delta T$. In
dieser Zeit ist die Torschaltung 120 durchgeschaltet und
das Empfangssignal liegt an einem der Torschaltung 120
nachgeschalteten Maximumsucher 121 an. Da die Begrenzung
des auszuwertenden Empfangssignals On-Line während der
Empfangsperiode durchgeführt wird, müssen die
Fenstergrenzen des Echoerwartungsfensters zum Zeitpunkt
der Toröffnung bereits festgelegt sein. Aus diesem Grund
wird für die Echoerwartungszeit T die vom
Flankendiskriminator 117 in der unmittelbar vorhergehenden
Sende- und Empfangsperiode ausgegebene Echolaufzeit T des
Erstechos verwendet.

In Fig. 12 ist beispielhaft ein durch das
Echoerwartungsfenster begrenztes Empfangssignal, wie es an
dem Maximumsucher 121 ansteht, dargestellt. Auf die
Einbeziehung von evtl. Störungen oder des immer
vorhandenen Rauschens im Empfangssignal ist aus Gründen
der Übersichtlichkeit verzichtet worden. Im allgemeinen
liegt das in Fig. 11 analog dargestellte Empfangssignal
digital in Form von diskreten Werten vor. Dem
Maximumsucher 121 ist ein Cash-Speicher 122
nachgeschaltet, an dem wiederum eine Recheneinheit 123
angeschlossen ist. Der Sample-Takt für den Maximumsucher
121, der gleich der Einschreibfrequenz des Cash-Speichers
122 ist, wird von einem Taktgenerator 124 geliefert. Der
Sample-Takt wird dabei an die Fensterlänge des
Echoerwartungsfensters adaptiert und ist entsprechend dem
Verhältnis von Kapazität des Cash-Speichers 122 zur
Fensterlänge bemessen.

Der Maximumsucher 121 sucht aus einer durch den
Sample-Takt vorgegebenen Anzahl von diskreten Werten des
Empfangssignals den Maximalwert aus. Mit dem Sample-Takt
wird dieser Maximalwert in den Cash-Speicher 122
eingeschrieben. Mit dem Einschreiben wird gleichzeitig der
Maximumsucher 121 gecleart, so daß er nunmehr nachfolgend
aus der nächsten Anzahl von diskreten Werten des
Empfangssignals den Maximalwert eliminiert. Der
Cash-Speicher 122 wird während der Toröffnungzeit der
Torschaltung 120 mit diesen Sample-Werten gefüllt. Sperrt
die Torschaltung 120 wieder, so ist der Cash-Speicher 122
vollständig aufgefüllt, beispielsweise mit 1024 Samples,
die exakt auf die Fensterlänge des Echoerwartungsfensters
aufgeteilt sind.

Mittels der Recheneinheit 123 werden nunmehr Off-Line die im Cash-Speicher 122 enthaltenen Speicherwerte ausgelesen
und das Schwerpunktintegral gemäß

$$T_S = (T - \Delta T) + \frac{\sum\limits_{n=1}^{N} U_n(t) \cdot t_n}{\sum\limits_{n=1}^{N} U_n(t)} \cdot C \qquad (9)$$

gebildet, wobei U die Amplitude des Empfangssignals und $t_n$
das durch den Sample-Takt festgelegte Zeitinkrement ist.
$U_n$ sind dabei die im Cash-Speicher 122 abgelegten
Abtastwerte, während $t_n$ den Speicheradressen des
Cash-Speichers 22 entsprechen. Die Konstante C
berücksichtigt, daß anstelle eines Flächenelementes
$U_n(t) \cdot \Delta t$ lediglich die Spannung $U_n(t)$ bei der
Schwerpunktsberechnung verwendet wird. Wird $\Delta t = 1$
gewählt, so ist C = 1. Die Zeitkomponente $T_S$ des
Schwerpunktes wird dem Rechenwerk 119 zugeführt, das
daraus mit einer ihm zugeführten Korrektur- und
Skalierungsgröße K die Tiefenwerte berechnet. Die Größe K
berücksichtigt Schallgeschwindigkeit,
Ausbreitungsanormalien und einen in Eichmessungen
gefundenen Kalibrierungsfaktor.

Anstelle der Berechnung der Fenstergrenzen des
Echoerwartungsfensters gemäß Gl. (7) kann die Länge des
Echoerwartungsfensters auch zunächst geschätzt werden.
Beispielsweise kann die Länge des Echoerwartungsfensters
gleich dem Dreifachen der zu erwartenden maximalen
Echolänge oder aber auch beispielsweise 10 bis 20 % der
vermuteten Wassertiefe angenommen werden. Die vordere und
hintere Fenstergrenze werden dabei im gleichen zeitlichen
Abstand zu der Echoerwartungszeit T vorgesehen. Mit diesen

0249036

Fenstergrenzen wird das Empfangssignal erfaßt und abgespeichert. Bei der vorstehend beschriebenen Bildung des Schwerpunktintegrals wird zusätzlich die Echolänge gemessen. Bei der nachfolgenden Lotperiode wird dann die Echogrenze des Echoerwartungsfensters annähernd auf die ermittelte Echolänge reduziert.

Über immer vorhandene Nebenzipfel des Empfangsbeams 111 können sog. Senkrechtechos empfangen werden. Senkrechtechos sind Echos, die von einem senkrecht auf dem Meeresboden 110 auftreffenden Schallimpuls ausgelöst werden. Diese Senkrechtechos haben eine maximale Amplitude. Diese Senkrechtechos sind identisch mit den vorstehend genannten Erstechos, da die Entfernung zwischen Empfänger und Meeresboden 110 minimal ist. Liegt dieses Senkrechtecho innerhalb des Echoerwartungsfensters, so geht dieses Senkrechtecho bei der Bildung des Schwerpunktintegrals mit ein und verfälscht die Echodetektion. Um dieses Senkrechtecho zu eliminieren, wird die vom Flankendiskriminator 117 ausgegebene Echolaufzeit T des Erstechos der Recheneinheit 123 des Echodiskriminators 18 zugeführt. Gleichzeitig erhält diese die Zeitdauer oder Zeitlänge L des Sendeimpulses angeliefert. Die Recheneinheit 123 reduziert nunmehr die im Cash-Speicher 122 in dem Zeitbereich T bis T+L enthaltenen Abtastwerte in ihrer Größe um einen vorgegebenen Betrag, was einer Dämpfung des Empfangssignals in diesem Zeitbereich T bis T+L gleichkommt. Auf diese Weise ist der Einfluß der über die Nebenzipfel empfangenen Senkrechtechos vor Schwerpunktbildung eliminiert.

26

PATENTANSPRÜCHE

1. Verfahren zur Bestimmung der Laufzeit von durch Beschallung eines Gewässergrundes mit Schallimpulsen ausgelösten Echos, bei welchem in über mindestens eine Empfangsrichtkeule aufgefaßten Empfangssignalen die Echos detektiert werden, dadurch gekennzeichnet, daß zur Detektion der Echos um eine aus der Echoausbreitung von einer bekannten Lottiefe aus abgeleitete Echoerwartungszeit (T) ein zeitliches Echoerwartungsfenster aufgespannt wird, dessen zeitliche Länge größer als eine aufgrund einer angenommenen maximalen Hanglage ($\Theta$) und/oder aufgrund eines von der Vertikalen abweichenden Empfangswinkels ($\Psi$) der Empfangsrichtkeule (111,17) zu erwartenden maximalen Echolänge bemessen wird und daß von dem durch das Echoerwartungsfenster begrenzten Empfangssignal das Schwerpunktintegral gebildet und mit der Zeitkomponente ($T_S$) des Schwerpunktes die Echolaufzeit festgelegt wird.

2. Verfahren nach Anspruch 1, dadurch gekennzeichnet, daß zusätzlich ein im wesentlichen ungerichteter Empfang oder ein gerichteter Empfang mit einer einen wesentlich größeren Öffnungswinkel aufweisenden Empfangsrichtkeule durchgeführt wird und daß die Echolaufzeit des im Signalverlauf ersten Echos als Echoerwartungszeit (T) verwendet wird.

3. Verfahren nach Anspruch 1 oder 2, dadurch gekennzeichnet, daß die Echoerwartungszeit (T) in einer unmittelbar vorhergehenden Lotperiode bestimmt wird.

4. Verfahren nach Anspruch 2 oder 3, dadurch gekennzeichnet, daß zur Ermittlung der Echoerwartungszeit (T) das Empfangssignal oder der Signalverlauf des im wesentlichen ungerichteten Empfangs einer an sich bekannten Flanken- oder Schwellwertdiskriminierung unterzogen wird.

5. Verfahren nach einem der Ansprüche 2 bis 4, dadurch gekennzeichnet, daß die Zeitgrenzen (T, T+L) des im Signalverlauf des im wesentlichen ungerichteten Empfangs zeitlich ersten Echos bestimmt werden und daß das Empfangssignal im Echoerwartungsfenster vor der Schwerpunktintegralbildung in diesen Zeitgrenzen (T, T+L) in einem vorgegebenen Maße bedämpft wird.

6. Verfahren nach einem der Ansprüche 2 bis 4, dadurch gekennzeichnet, daß das Empfangssignal im Echoerwartungsfenster vor Schwerpunktintegralbildung zwischen den von der Echoerwartungszeit (T) und der Summe aus Echoerwartungseit (T) und Schallimpulsdauer (L) festgelegten Zeitgrenzen (T, T+L) in einem vorgegebenen Maße bedämpft wird.

7. Verfahren nach einem der Ansprüche 1 bis 6, dadurch gekennzeichnet, daß nach Auffinden des Schwerpunktes die Schwerpunktintegralbildung mindestens einmal in symmetrisch zu der Zeitkomponente ($T_S$) des zuvor gefundenen Schwerpunktes reduzierten Zeitgrenzen wiederholt wird.

8. Verfahren nach einem der Ansprüche 1 bis 7, dadurch gekennzeichnet, daß bei vertikaler Empfangsrichtkeule (111) die Fenstergrenzen (T-$\Delta$T, T+$\Delta$T) des Echoerwartungsfensters vor und hinter die Echoerwartungszeit (T), vorzugsweise in gleichem zeitlichen Abstand ($\Delta$T), gelegt werden.

9. Verfahren nach Anspruch 8, dadurch gekennzeichnet, daß die Länge des Echoerwartungsfensters zunächst geschätzt wird, z. B. gleich dem Dreifachen der zu erwartenden maximalen Echolänge, und daß für das in der folgenden Lotperiode aufzufassende Empfangssignal die Länge des Echoerwartungsfensters auf etwa die zuvor tatsächlich festgestellte Echolänge reduziert wird.

10. Verfahren nach Anspruch 8, dadurch gekennzeichnet, daß zur Festlegung der Länge des Echoerwartungsfensters der zeitliche Abstand ($\Delta$T) der Fenstergrenzen von der Echoerwartungszeit (T) gemäß

$$\Delta T = T \left[ \frac{1}{\cos \vartheta} \left(1 - \frac{1}{1- \frac{1}{\Theta} \operatorname{ctg} \vartheta}\right) - 1 \right]$$

bestimmt wird, wobei 2 der Öffnungswinkel der Empfangsrichtkeule (111), $\Theta$ die Neigung oder Steigung einer angenommenen maximalen Hanglage des Meeresbodens (110) und T die Echoerwartungszeit ist.

11. Verfahren nach einem der Ansprüche 1 bis 10, gekennzeichnet durch seine Verwendung zur Tiefenlotung in Wasser, bei welcher aus den Echolaufzeiten unter Berücksichtigung der Schallgeschwindigkeit in Wasser Tiefenpunkte ermittelt werden.

12. Verfahren nach einem der Ansprüche 1 bis 7, dadurch gekennzeichnet, daß bei einer unter einem Empfangswinkel ($\varphi$) zur Vertikalen geschwenkten Empfangsrichtkeule (17) die vordere Fenstergrenze ($T_V$) gemäß

$$T_V = T \left[ \frac{1}{\cos\varphi} \left(1 - \frac{1}{1 + \frac{1}{\Theta}\,ctg\,\varphi}\right) - 1 \right]$$

und die hintere Fenstergrenze ($T_H$) gemäß

$$T_H = T \left[ \frac{1}{\cos\varphi} \left(1 - \frac{1}{1 - \frac{1}{\Theta}\,ctg\,\varphi}\right) - 1 \right]$$

bemessen wird, wobei $\varphi$ der gegen die Vertikale gemessene Empfangswinkel der Empfangsrichtkeule (17), $\Theta$ die Steigung der maximal angenommenen Hanglage und T die Echoerwartungszeit ist.

13. Verfahren nach Anspruch 12, dadurch gekennzeichnet, daß bei der Bemessung der hinteren, zeitlich späteren Fenstergrenze ($T_H$) zusätzlich eine maximal mögliche Echolänge berücksichtigt wird, die aus dem Empfangswinkel ($\varphi$) der Empfangsrichtkeule (17), dem Öffnungswinkel ($2\vartheta$) der Empfangsrichtkeule (17) und der maximal angenommenen Hanglage ($\pm\Theta$) des Gewässergrundes (12) in Richtung der Empfangsrichtkeule (17) berechnet wird.

14. Verfahren nach Anspruch 13, dadurch gekennzeichnet, daß zur Berücksichtigung der maximalen Echolänge die hintere Fenstergrenze ($T_H$) um ein Zeitinkrement ($\Delta T''$) gemäß

$$\Delta T'' = T\left[\frac{1}{\cos(\varphi + \vartheta)}\left(1 - \frac{1}{1 - \frac{1}{\Theta}\operatorname{ctg}(\varphi + \vartheta)}\right) - \frac{1}{\cos\varphi}\left(1 - \frac{1}{1 - \frac{1}{\Theta}\operatorname{ctg}\varphi}\right)\right]$$

zu größeren Zeitwerten verschoben wird, wobei $\varphi$ der gegen die Vertikale gemessene Empfangswinkel und $2\vartheta$ der Öffnungswinkel der Empfangsrichtkeule (17), $\Theta$ die Steigung bzw. Neigung der maximal angenommenen Hanglage und T die Echoerwartungszeit ist.

15. Verfahren nach einem der Ansprüche 12 bis 14, gekennzeichnet durch seine Verwendung zur akustischen Vermessung des Oberflächenprofils eines Gewässergrundes, bei welcher ein Fächer von gegen die Vertikale mit unterschiedlichen Empfangswinkeln ($\varphi$) geschwenkten Empfangsrichtkeulen (17) aufgespannt ist und aus den unter den Empfangswinkeln ($\varphi$) bestimmten Echolaufzeiten bei Berücksichtigung der Schallgeschwindigkeit in Wasser Tiefenpunkte ermittelt werden.

16. Vorrichtung zur Durchführung des Verfahrens nach einem der Ansprüche 1 bis 11, gekennzeichnet durch eine Sende- und Empfangsantenne (112) aus einer Vielzahl von elektroakustischen Wandlern (114), einen an der Antenne (112), vorzugsweise über einen zeitabhängigen Verstärkungsregler (115), angeschlossenen Richtungsbildner (116) zum Bilden der vertikalen
Empfangsrichtkeule (111), einen an dem
Richtungsbildner (116) angeschlossenen
Echodiskriminator (118) zur Echodetektion in dem über
die vertikale Empfangsrichtkeule (111) erhaltenen
Empfangssignal und einen eingangsseitig mit der
Antenne (112), vorzugsweise unter Zwischenschaltung
des Verstärkungsreglers (115), verbundenen und
ausgangsseitig an den Echodiskriminator (118)
angeschlossenen Flankendiskriminator (117).

17. Vorrichtung nach Anspruch 16, dadurch gekennzeichnet,
daß der Echodiskriminator (118) eine Torschaltung
(120) mit einer dem Echoerwartungsfenster
entsprechenden Toröffnungszeit, einen der Torschaltung
(120) nachgeschalteten Maximumsucher (121), einen dem
Maximumsucher (121) nachgeschalteten Speicher (122)
zum Einschreiber der vom Maximumsucher (121)
ausgegebenen Maximalwerte und eine am Speicherausgang
angeschlossene Recheneinheit (123) zum Berechnen des
Schwerpunktintegrals aus den im Speicher (122)
abgelegten Maximalwerten aufweist.

18. Vorrichtung zur Durchführung des Verfahrens nach einem
der Ansprüche 1 bis 7 oder 12 bis 15, gekennzeichnet
durch eine Empfangsantenne (14) aus einer Vielzahl von
äquidistant angeordneten elektroakustischen
Wandlern (15), einen an der Antenne (14) vorzugsweise
über einen zeitabhängigen Verstärkungsregler (19)
angeschlossenen Richtungsbildner (20) zum Bilden der
mindestens einen Empfangsrichtkeule (17), vorzugsweise
einer Vielzahl von in einem Sektor fächerartig
aufgespannten Empfangsrichtkeulen (17), einen an dem
Richtungsbildner (20) angeschlossenen
Echodiskriminator (22) zur Echodetektion in dem über die mindestens eine Empfangsrichtkeule (17),
vorzugsweise in jeder Empfangsrichtkeule (17),
erhaltenen Empfangssignal und einen eingangsseitig mit
der Antenne (14), vorzugsweise unter Zwischenschaltung
des Verstärkungsreglers (19) verbundenen und
ausgangsseitig an den Echodiskriminator (22)
angeschlossenen Flankendiskriminator (21) zur
Detektion des im Empfangssignal der Antenne (14)
enthaltenen Erstechos.

19. Vorrichtung nach Anspruch 18, dadurch gekennzeichnet,
daß der Echodiskriminator (22) in Zuordnung zu jeder
Empfangsrichtkeule (17) eine Torschaltung (24) mit
einer dem Echoerwartungsfenster entsprechenden
Toröffnungszeit, einen der Torschaltung (24)
nachgeschalteten Maximumsucher (25), einen dem
Maximumsucher (25) nachgeschalteten Speicher (26) zum
Einschreiben der Maximalwerte und eine am
Speicherausgang angeschlossene Recheneinheit (27) zum
Berechnen des Schwerpunktintegrals aus den im Speicher
abgelegten Maximalwerten aufweist.

20. Vorrichtung nach einem der Ansprüche 16 bis 19,,
dadurch gekennzeichnet, daß ein die Toröffnungszeit
für die Empfangsrichtkeule (111) bzw. für die
Empfangsrichtkeulen (17), festlegendes
Rechenwerk (119, 23) einerseits mit dem
Flankendiskriminator (117, 21) und andererseits mit
dem Steuereingang der Torschaltung (120, 24) verbunden
ist.

21. Vorrichtung nach einem der Ansprüche 17 bis 20,
dadurch gekennzeichnet, daß die Einschreibfrequenz des
Speichers (122, 26) an die Fensterlänge des
Echoerwartungsfensters adaptiert ist.

Fig. 1

Geradengleichungen:

$$\text{I} \quad : y = -\theta \cdot x$$

$$\text{II} \quad : y = -x \cdot \text{ctg}\, \varphi + T$$

$$\text{III} \quad : y = -x \cdot \text{ctg}\, (\varphi + \vartheta) + T$$

Fig. 4

Fig. 2

Geradengleichungen

I    $y = \pm\theta \cdot x$

II   $y = -x \cdot \text{ctg}\,\varphi + T$

0249036

Fig. 3

TVC

Richtungsbildner

Echodiskrimi-
nator

Flankendiskrimi-
nator

Rechenwerk

$T_S$

T

K

15

22

14

19

20

21

23

4/10

0249036

Fig. 5

Fig. 6

0249036

Fig. 7

Echoerwartungsfenster

113

2ϑ

111

110

Fig. 8

Geradengleichungen:

I : $y = -\theta \cdot x$

II : $y = -x \cdot ctg\,\vartheta + T$

III : $y = \theta \cdot x$

IV : $y = x \cdot ctg\,\vartheta + T$

Fig. 9

TVC

Richtungs-bildner

Echo-diskrimi-nator

Flanken-diskrimi-nator

Rechen-werk

$T_S$

T

K

114
112
115
116
118
117
119

0249036

Fig. 10

120 Tor

121 Max-sucher

122 Cash-speicher

123 Rechen-einheit

118

Clear

$T_S$

L

T

$T-\Delta T$  $T+\Delta T$

124

Fig. 11

Fig. 12

0249036